# EUROPÄISCHE PATENTSCHRIFT

(11) **EP 1 214 491 B1**
(45) Veröffentlichungstag und Bekanntmachung des Hinweises auf die Patenterteilung: **13.10.2004**
(21) Anmeldenummer: 00947737.3
(22) Anmeldetag: 10.08.2000
(51) Int. Cl.: E05B 47/06, H02K 7/06

(54) **SPERREINRICHTUNG FÜR EIN ZYLINDERSCHLOSS**
BLOCKING DEVICE FOR A CYLINDER LOCK
UNITE DE VERROUILLAGE POUR UNE SERRURE A BARILLET

(30) Priorität: 21.09.1999 CH 173099
(43) Veröffentlichungstag der Anmeldung: 19.06.2002
(73) Patentinhaber: Berchtold AG, SEA Schliess-Systeme, 3052 Zollikofen (CH)
(72) Erfinder: VONLANTHEN, Benno, CH-3052 Zollikofen (CH)
(74) Vertreter: Bruderer, Werner
(86) Internationale Anmeldenummer: PCT/CH2000/000429
(87) Internationale Veröffentlichungsnummer: WO 2001/021913

(56) Entgegenhaltungen:
- WO-A-98/28508
- DE-A- 4 404 914

## Beschreibung

Die Erfindung betrifft eine Sperreinrichtung für ein Zylinderschloss mit einem Stator, einem in diesem Stator mittels eines Schlüssels drehbaren Rotor, einem zusätzlichen entlang einer Verschiebeachse linear in den Rotor ein- und ausrückbaren Sperrelement und einem elektrisch angetriebenen Steuermittel zur Betätigung dieses Sperrelementes, wobei das Steuermittel eine rotierende Abtriebswelle aufweist, einem Schraubgetriebe, welches zwischen dem Steuermittel und dem Sperrelement angeordnet ist, sowie einer elektrischen Steuereinrichtung zur Erzeugung von Steuersignalen für das Steuermittel und ein Verfahren zum Betrieb dieser Einrichtung.

Sperreinrichtungen dieser Art finden Verwendung bei Schlössern, insbesondere Zylinderschlössern. Bei Zylinderschlössern ist es bekannt, mechanisch codierte Zuhaltungen zwischen Rotor und Stator vorzusehen und zusätzlich eine mechatronisch sperrende Einrichtung vorzusehen, weiche den Rotor unabhängig von den mechanisch codierten Zuhaltungen sperrt. Durch diese Kombination von mechanisch codierten Zuhaltungen mit einer elektrischen, bzw. elektronischen Codierung kann die Sicherheit und Anpassungsfähigkeit derartiger Schlösser, bzw. Schliesseinrichtungen erheblich erhöht werden. Eine derartige Schliessvorrichtung ist beispielsweise aus EP-A 730 073 bekannt. Diese Schliesseinrichtung weist in bekannter Weise einen drehbaren Rotor auf, wobei dieser Rotor mit einem Schlüsselkanal versehen ist, in welchen ein Flachschlüssel eingesteckt werden kann. Dieser Flachschlüssel weist am Schlüsselbart in an sich bekannter Weise mechanische Codierungen auf, mit welchen Zuhaltungen zwischen Rotor und Stator zusammenwirken. Bei richtiger Codierung des Schlüssels können diese mechanischen Zuhaltungen entsperrt und damit der mechanische Teil der Schliesseinrichtung in Öffnungsposition gebracht werden. Zusätzlich weist der Schlüssel eine elektronische Codierung auf, welche in diesem Beispiel einen Sender für Informationssignale umfasst. Als Gegenstück ist am Zylinderschloss ein Empfänger angeordnet, welcher die vom Schlüssel ausgesendeten Informationssignale empfängt und einer elektronischen Verarbeitungseinrichtung zuführt. Diese elektronische Einrichtung steuert eine zusätzliche elektromechanische Verriegelung, deren Sperrteil in den Rotor ein- und ausrückbar ist. Diese elektromechanische Verriegelung umfasst dabei einen Betätigungsteil, bzw. ein Steuermittel für das Sperrteil. Beim Steuermittel kann es sich um bekannte Mittel zur Erzeugung translatorischer Bewegungen handeln, beispielsweise einen Magnetantrieb oder einen rotierenden Stellantrieb. Um das Sperrteil in der Sperrposition zu halten und gegen unbefugte Beeinflussung von aussen zu sichern, ist eine Rückstellfeder vorhanden, welche das Sperrteil in Richtung des Rotors drückt. Dies ist insbesondere bei Sperrteilen, welche durch Hubmagnete translatorisch bewegt werden, notwendig, da hier im stromlosen Zustand das Steuermittel keine Kräfte auf das Sperrteil ausübt.

Die oben beschriebene und weitere bekannte Schliesseinrichtungen mit Zylinderschlössern, welche einerseits eine rein mechanische Codierung und andererseits eine elektronische Codierung mit zusätzlichen mechanischen Sperrelementen aufweist, benötigen zur ordnungsgemässen Betätigung, bzw. Entsperrung einen mechanisch richtig codierten Schlüssel und ein Elektronikmodul am Schlüssel, welches Informationssignale, bzw. Daten mit einem Elektronikmodul im Zylinderschloss austauscht. Dabei kann dieser Datenaustausch durch direkte Kontaktelemente oder berührungslos über ein Sender-Empfänger-System erfolgen. Wenn das Elektronikmodul auf dem Schlüssel die richtigen Daten enthält, anerkennt das Elektronikmodul im Zylinderschloss diesen Schlüssel als öffnungsberechtigt und gibt die zusätzliche Sperreinrichtung frei. Trotz dieser zweifachen Codierung und erhöhten Sicherheit sind die bekannten elektromechanischen, bzw. mechatronischen Schliesseinrichtungen bei genügendem Aufwand noch durch Magnetkräfte, Fibrationskräfte oder Schläge, oder Kombinationen davon, beeinflussbar. Dies kann in Grenzfällen dazu führen, dass eine derartige Schliesseinrichtung auch ohne Schlüssel mit passender elektronischer Codierung unberechtigterweise geöffnet werden kann. Nachteilig ist bei Schliesseinrichtungen mit Zylinderschlössern dieser Art und mit einem zusätzlichen elektronisch gesteuerten Sperrelement auch der Umstand, dass das zusätzliche Sperrelement und die entsprechenden Steuermittel, insbesondere bei der Betätigung durch einen Hubmagneten, Abmessungen aufweisen, welche grösser sind als die normalen Gehäuse handelsüblicher Zylinderschlösser. Es sind deshalb Zusatzgehäuse notwendig und die entsprechenden Schliesseinrichtungen können nicht in die standardisierten, normalerweise verwendeten Schlosskasten an Türen oder anderen Objekten eingesetzt werden. Um den Einbau zu ermöglichen sind zusätzliche Anpassungen und Änderungen notwendig.

Bei den mechanisch codierten Zylinderschlössem, welche beispielsweise bei Drehgriffschlössem oder Zylinderoliven für Drehstangenschlösser Verwendung finden, ist es bekannt, dass die Baumasse reduziert werden können, wenn das Sperrelement über ein Schraubgetriebe betätigt wird. Diese bekannten Betätigungen von Sperrelementen durch Schraubgetriebe vermögen jedoch das Problem des unbefugten Entriegelns durch Einwirkungen von aussen nicht zu lösen. Aus WO 98/28508 ist eine Lösung bekannt, welche im wesentlichen eine zusätzliche elektromechanische Verriegelung verwendet, wie sie in EP-A 730 073 beschrieben ist, wobei unter anderem zur Erzeugung der Bewegung des Sperrelementes ein Steuermittel mit verschiedenen Arten von Schraubgetrieben vorgeschlagen wird. Um unbefugten Einwirkungen auf das Sperrelement von aussen entgegenzuwirken, sind zusätzlich Rückstellmittel und/oder Kraftübertragungsmittel notwendig, welche allfällig von aussen aufgebrachte Kräfte neutralisieren oder diesen entgegenwirken sollen. Diese Rückstell- und Kraftübertragungsmittel sind im wesentlichen etwa rechtwinklig zur Längsachse des Gewindetriebes am Steuermittel angeordnet, wodurch entweder radial oder parallel zur Längsachse des Zylinderschlosses zusätzlicher Raum benötigt wird. Auch diese Einrichtung lässt sich deshalb nicht in die Gehäuse von normalen Zylinderschlössern einbauen, sondern es sind zusätzliche Ringgehäuse oder Längsgehäuseteile notwendig.

Durch die Vielzahl von benötigten Teilen und deren unterschiedlichen Wirkungsachsen ist der Zusammen- und Einbau dieser Sperreinrichtung aufwendig und erfordert oft zusätzliche Anpassungen im Einbaubereich in ein Objekt, z.B. in einen Schlosskasten und/oder eine Türe.

Es ist Aufgabe der vorliegenden Erfindung, eine Sperreinrichtung für ein Zylinderschloss mit einer zusätzlichen mechatronischen Sperreinrichtung zu schaffen, bei welcher diese zusätzliche Sperreinrichtung in ein normales Schloss-Gehäuse, z.B. in dessen Steg einbaubar ist, dabei gleichzeitig das unbefugte Entsperren durch Einwirkungen von aussen praktisch verhindert wird und die zusätzliche Sperreinrichtung als kompakte Baueinheit in einfacher Weise und mit möglichst wenig Teilen aufgebaut ist. Im weiteren soll die zusätzliche Sperreinrichtung für ein Zylinderschloss als Bausatz ausgebildet sein, welcher die Nachrüstung von mechanisch codierten Zylinderschlössern ermöglicht und sie soll im weiteren bei unterschiedlichen Systemen von Zylinderschlössern einsetzbar sein.

Diese Aufgabe wird vorrichtungsgemäss durch die im kennzeichnenden Teil des Patentanspruches 1 definierten Merkmale gelöst und verfahrensgemäss nach den Merkmalen des unabhängigen Verfahrensanspruches. Vorteilhafte Weiterbildungen der Erfindung ergeben sich nach den Merkmalen der abhängigen Patentansprüche.

Bei der erfindungsgemässen Sperreinrichtung ist die Abtriebswelle des Steuermittels, die Drehachse des Schraubgetriebes, sowie das Sperrelement und dessen lineare Führung auf einer gemeinsamen Längsachse angeordnet, bzw. diese Elemente weisen eine gemeinsame Achse auf. Diese Anordnung erbringt den Vorteil, dass diese Elemente zu einer kompakten Baueinheit zusammengefasst werden können und eine vereinfachte Bauweise ermöglicht wird. Durch die Ausrichtung der Drehachse des Schraubgetriebes auf die gemeinsame Längsachse kann die Drehbewegung der Abtriebswelle des Steuermittels direkt in die Linearbewegung des Sperrelementes umgesetzt werden, ohne dass zusätzliche Elemente, wie Rückstellmittel oder Kraftübertragungsmittel notwendig sind. Die Schraubennute, weiche an einem ersten Teil des Schraubgetriebes entlang einer Mantelfläche um die gemeinsame Längsachse angeordnet ist, weist über eine bestimmte vorgegebene Strecke eine positive Steigung auf und bildet damit eine wendelförmige Rampe, ähnlich wie bei einer Gewindeschnecke. Die Schraubennute weist eine bestimmte Länge auf, welche mit der Steigung den linearen Hubweg des Schraubgetriebes bestimmt. Die beiden Endbereiche der Schraubennute sind durch Anschlagflächen abgeschlossen und bestimmen einerseits die Sperrposition des Sperrelementes und anderseits die Öffnungsposition des Sperrelementes. In der Sperrposition ist das Sperrelement in den Rotor eingerückt und blockiert diesen gegenüber dem Stator. In der Öffnungsposition greift das Sperrelement nicht in den Rotor ein und ist aus diesem ausgerückt. Mindestens an demjenigen Endbereich der Schraubennute, welcher die Sperrposition des Sperrelementes bestimmt, ist ein zusätzliches Längenelement der Sperrnute angeordnet, welches keine Steigung aufweist. Dieses Längenelement ohne Steigung liegt in einer Radialebene zur Längsachse. Das an einem zweiten Teil des Schraubgetriebes angeordnete Gleitelement, welches in die Schraubennute eingreift, ist in diesem Bereich der Schraubennute ohne Steigung formschlüssig und ohne Krafteinwirkung in Richtung der gemeinsamen Längsachse gehalten. In Verbindung mit dem Merkmal, dass entweder das erste Teil des Schraubgetriebes mit der Schraubennute oder das zweite Teil des Schraubgetriebes mit dem Gleitelement fest mit dem Sperrelement verbunden ist, ergibt sich daraus der Vorteil, dass das Sperrelement in diesem Endbereich der Schraubennute, d.h. in der Sperrposition, ebenfalls formschlüssig und ohne Krafteinwirkung gehalten wird. In zweckmässiger Weise ist auch der zweite Endbereich der Schraubennute mit einem zusätzlichen Längenelement versehen, welches keine Steigung aufweist. Dadurch wird der Vorteil erreicht, dass in beiden Endpositionen des Schraubgetriebes das Sperrelement durch eine Wirkverbindung zwischen der Schraubennute und dem Gleitelement gehalten wird, welche durch Fremdeinflüsse von aussen nicht beeinflusst werden kann. Derartige Fremdeinflüsse, wie Magnetkräfte, Vibrationen, Schläge oder Resonanzschwingungen können bei dieser erfindungsgemässen Ausgestaltung der Sperreinrichtung das Sperrelement nicht aus der Sperr-, bzw. Öffnungsposition verschieben. Unbefugte Betätigungen der Sperreinrichtung sind deshalb praktisch unmöglich. Wird an einem Endbereich der Schraubennute mit positiver Steigung oder an ein Längenelement der Schraubennute ohne Steigung ein zusätzliches Längenelement der Schraubennute mit negativer Steigung angefügt, so ergibt sich eine zusätzliche Verbesserung der Sicherheit, da dann beispielsweise bei einem unbefugten Versuch, das Sperrelement aus der Sperrposition in die Öffnungsposition zu verschieben, zuerst eine entgegengerichtete Bewegung erzeugt werden müsste. Der lineare Verschiebeweg des Sperrelementes aus der Sperrposition in die Öffnungsposition und umgekehrt lässt sich in einfachster Weise durch Verändern der Länge und/oder der Steigung der Schraubennute an die gewünschten Verhältnisse anpassen. Wegen der direkten Kupplung zwischen Schraubgetriebe und Sperrelement entspricht der Hubweg des Schraubgetriebes dem linearen Verschiebeweg des Sperrelementes. Da mindestens in der Sperrposition keine zusätzlichen Halte- und Rückstellkräfte auf das Sperrelement wirken, wird diese Endposition nur durch die zwangsweise Führung des Gleitelementes in der Schraubennute bestimmt und ist durch die formschlüssige Halterung eindeutig bestimmt.

Die erfindungsgemässe Sperreinrichtung hat weitere Vorteile, indem die Elemente des Schraubgetriebes und deren Verbindung zum Sperrelement einerseits und zur Abtriebswelle des Steuermittels anderseits unterschiedlich ausgestaltet sein können. In einer ersten vorteilhaften Ausführung ist das erste Teil des Schraubgetriebes an der Abtriebswelle ausgebildet und zwar durch ein zylindrisches Bauteil, in dessen äusseren Mantelfläche die Schraubennute angeordnet ist. Das zweite Teil des Schraubgetriebes ist durch ein Endteil am Sperrelement mit einer Innenbohrung gebildet, wobei das Gleitelement am Mantel dieser Innenbohrung angeordnet ist und radial in die Bohrung ragt. Das zylindrische Bauteil an der Abtriebswelle greift in die Innenbohrung am Endteil des Sperrelementes ein und ist in dieser Bohrung geführt. Dabei greift das Gleitelement in die Schraubennute am Aussenmantel des zylindrischen Bauteiles ein und wirkt mit dieser zusammen. Das zylindrische Bauteil ist drehfest mit der Abtriebswelle des Steuermittels verbunden und bei Rotationsbewegungen der Abtriebswelle um die gemeinsame Längsachse wird auch das zylindrische Bauteil rotiert, wodurch das Gleitelement und damit das Sperrelement linear in Richtung der gemeinsamen Längsachse verschoben wird. Das Endteil des Sperrelementes ist dazu in an sich bekannter Weise gegen Verdrehung gesichert, so dass zwischen dem ersten und dem zweiten Teil des Schraubgetriebes die gewünschte Umwandlung der Drehbewegung in eine Linearbewegung stattfindet. Eine weitere Ausführungsform des Schraubgetriebes besteht darin, dass das zweite Teil des Schraubgetriebes durch die Abtriebswelle des Steuermittels gebildet ist, wobei das Gleitelement an dieser Abtriebswelle befestigt ist und radial nach aussen ragt. Das Sperrelement weist ebenfalls ein Endteil mit einer Innenbohrung auf, wobei in die Mantelfläche dieser Innenbohrung die Schraubennute eingeformt ist. Das Endteil des Sperrelementes ist über die Abtriebswelle geschoben, und zwischen der Mantelfläche der Innenbohrung und dem Aussenmantel der Abtriebswelle ist eine Gleitführung gebildet. Das Gleitelement greift in die Schraubennute ein und bei Rotationsbewegungen der Abtriebswelle wird das Sperrelement durch das Zusammenwirken von Gleitelement und Schraubennute linear in Richtung der gemeinsamen Längsachse verschoben. Auch hier ist das Endteil des Sperrelementes gegen Verdrehung um die gemeinsame Längsachse gesichert, damit die Umwandlung der Rotationsbewegung am Steuermittel in Linearbewegungen des Sperrmittels gewährleistet ist. Bei einer besonders vorteilhaften Ausbildung des Gewindetriebes ist das Sperrelement mit einem Endteil ausgebildet, welches eine Kembohrung aufweist und an dessen äusserer Mantelfläche die Schraubennute angeordnet ist. Zwischen der Kernbohrung des Endteiles am Sperrelement und der Abtriebswelle des Steuermittels ist eine Gleitnutverbindung ausgebildet, wobei beispielsweise die Abtriebswelle als Keilwelle ausgebildet ist und an der Mantelfläche der Kembohrung am Endteil entsprechende Nuten ausgeformt sind. Diese Gleitnutverbindung zwischen Sperrelement und Abtriebswelle ermöglicht die Übertragung der Drehbewegungen der Abtriebswelle auf das Sperrelement und gleichzeitig die lineare Verschiebung des Sperrelementes in Richtung der gemeinsamen Längsachse. Das Endteil des Sperrelementes ist in einer feststehenden Hülse geführt, wobei am Innenmantel dieser Hülse das Gleitelement angeordnet ist, welches radial in die Bohrung der Hülse ragt und in die Schraubennute am Aussenmantel des Endteiles des Sperrelementes eingreift. Bei dieser Ausführungsform bildet die Hülse und das Gleitelement das zweite Teil des Schraubgetriebes und das Endteil des Sperrelementes mit der Gleitnutverbindung das erste Teil des Schraubgetriebes. Diese Ausführungsform weist den Vorteil auf, dass die Hülse gleichzeitig als Aussengehäuse für die ganze Baueinheit, welche das Steuermittel mit der Abtriebswelle, das Schraubgetriebe und das Sperrelement umfasst, ausgebildet werden kann. Dies ermöglicht die Vormontage der Baueinheit, welche als Ganzes in eine entsprechende Bohrung am Zylinderschloss eingesetzt und in einfacher Weise mit den elektrischen Leitungen verbunden werden kann.

Die kompakte Bauform der Baueinheit, welche durch das Steuermittel, das Schraubgetriebe und das Sperrelement gebildet ist, und deren Ausrichtung auf eine gemeinsame Längsachse ermöglicht den Einbau dieser Sperreinrichtung in den Steg eines Zylinderschlosses mit den üblichen Baumassen. Dabei bleibt die Aussenform des Gehäuses des Zylinderschlosses erhalten und das Zylinderschloss mit der erfindungsgemässen zusätzlichen Sperreinrichtung kann in die üblichen Einbauöffnungen an Einbauobjekten, z.B. einen Schlosskasten, eingebaut werden. Dies führt zu einer erheblichen Vereinfachung, da einerseits ein Zylinderschloss mit der erfindungsgemässen Sperreinrichtung werkseitig vollständig zusammengestellt und funktionsbereit produziert werden kann und anderseits bei der bauseitigen Montage keine Zusatzmassnahmen mehr notwendig sind. Bei der Anordnung der erfindungsgemässen Sperreinrichtung im Steg eines Zylinderschlosses ist die gemeinsame Längsachse etwa radial zur Drehachse des Rotors ausgerichtet. Am Frontteil des Sperrelementes ist ein Sperrzapfen angeordnet, wobei dieser Sperrzapfen in der Sperrposition des Zylinderschlosses in eine etwa radiale Bohrung am Rotor eingreift. Da im Bereiche des Steges zwischen Rotor und Stator normalerweise keine mechanischen Zuhaltungen angeordnet sind, kann die radiale Bohrung im Rotor für den Eingriff des Sperrzapfens am Sperrelement in diesem Bereich gut angeordnet werden. Dies, ohne dass mechanische Zuhaltungen weggelassen werden müssen oder deren Funktion eingeschränkt würde. Die erfindungsgemässe Sperreinrichtung ist damit in einem weiten Bereich vom System der mechanisch codierten mechanischen Zuhaltungen unabhängig, d.h. die erfindungsgemässe Sperreinrichtung kann mit unterschiedlichen Bauarten von Zylinderschlössern kombiniert werden. Dies ist möglich, weil alle Zylinderschlösser einem Industriestandard entsprechen und einen radial vom Stator nach aussen ragenden Steg aufweisen, welcher unter anderem der drehsicheren Befestigung des Zylinderschlosses im Bauobjekt, z.B. einem Schlosskasten, dient.

Die Vorteile des Verfahrens zum Betrieb der erfindungsgemässen Sperreinrichtung bestehen darin, dass die Drehbewegungen der Abtriebswelle des Steuermittels direkt in lineare Bewegungen des Sperrmittels in Richtung der Längsachse umgewandelt werden und dass auf das Sperrelement während des Verschiebevorganges von der Sperr- in die Öffnungsposition und umgekehrt, sowie in den Haltepositionen keine zusätzlichen Halte- und/oder Rückstellkräfte ausgeübt werden. Dies hat den weiteren Vorteil, dass der Bewegungsablauf und das Verfahren zur Erzeugung der Bewegungen des Sperrelementes auf Seiten der Sperreinrichtung relativ einfach sind und trotzdem ein Eingriff in den Bewegungsablauf durch von aussen unbefugterweise aufgebrachte Zusatzkräfte praktisch verunmöglicht wird. Beim Verschieben des Sperrelementes in die Sperrposition oder in die Öffnungsposition ist es vorteilhaft, die Rotationsbewegung der Abtriebswelle mit Hilfe von Endanschlägen am Schraubgetriebe zu stoppen, wenn diese Endpositionen erreicht sind. Das Stoppen, bzw. der Stillstand der Abtriebswelle wird über die Steuereinrichtung elektronisch festgestellt und nach Ablauf einer vorbestimmten Steuerzeit wird die Energiezufuhr zum Steuermittel unterbrochen. Dieses Steuerverfahren hat den Vorteil, dass das Steuermittel, welches über die Abtriebswelle das Schraubgetriebe antreibt, nicht mit Hilfe einer elektronischen Positionssteuerung gestoppt werden muss, sondern die Position des Schraubgetriebes den Unterbruch und/oder die Freigabe der Energiezufuhr zum Steuermittel steuert. In vorteilhafter Weise wird das Steuermittel während der aktivierten Zeitspanne intermittierend, bzw. pulsierend mit Energie gespiesen. Damit ist eine Mehrfachnutzung und Optimierung der Energiequelle, z.B. einer Batterie möglich, insbesondere wenn die gesamte Dauer der Energiezufuhr von der Steuereinrichtung festgelegt wird. Die Aktivierung der Steuereinrichtung und damit die Art und Weise der Freigabe der Energiezufuhr zum Steuermittel mit der Abtriebswelle wird durch Informationssignale aktiviert, welche von einem mobilen Informationsträger an das Zylinderschloss übertragen werden. Dabei kann die Übertragung der Informationen, bzw. Daten, in vorteilhafter Weise direkt über Kontaktelemente erfolgen oder über ein kontaktloses Sender-Empfänger-System. Beim mobilen Informationsträger handelt es sich beispielsweise um einen Schlüssel mit einem elektronischen Datenträger oder um eine Identifikationskarte mit einem entsprechenden Datenträger. Als Gegenstück ist im Zylinderschloss oder im zugehörigen Schlosskasten eine elektronische Datenverarbeitungseinheit eingebaut, welche die Daten mit dem mobilen Informationsträger über direkte Kontakte oder ein kontaktloses Sender-Empfänger-System, z.B. ein Funksystem austauscht.

Im folgenden wird die Erfindung anhand von Ausführungsbeispielen unter Bezugnahme auf die beiliegenden Zeichnungen näher erläutert. Es zeigen:
- Fig. 1: ein Doppelzylinderschloss mit einem Teilschnitt durch den Bereich mit dem zusätzlichen Sperrelement,
- Fig. 2: einen Schnitt durch eine Einbaueinheit mit Steuermittel, Schraubgetriebe und zusätzlichem Sperrelement in Sperrposition,
- Fig. 3: eine Einbaueinheit gem. Fig. 2 mit dem zusätzlichen Sperretement in Öffnungsposition,
- Fig. 4: eine Detaildarstellung eines ersten Teiles des Schraubgetriebes mit der Schraubennute und dem damit verbundenen Sperrelement,
- Fig. 5: einen Querschnitt durch das erste Teil des Schraubgetriebes entlang der Linie A-A in Fig. 4,
- Fig. 6: eine Abwicklung einer Schraubennute an einem ersten Teil des Schraubgetriebes in schematischer Darstellung,
- Fig. 7: eine Abwicklung einer Schraubennute eines ersten Teiles des Schraubgetriebes in schematischer Darstellung mit einem Endbereich mit negativer Steigung,
- Fig. 8: eine zweite Ausführungsform einer Einbaueinheit mit einem zusätzlichen Sperrelement und einer anderen Ausführung des Gewindetriebes, und
- Fig. 9: eine weitere Ausführungsform einer Einbaueinheit mit dem zusätzlichen Sperrelement und einer weiteren Ausführungsform des Schraubgetriebes.

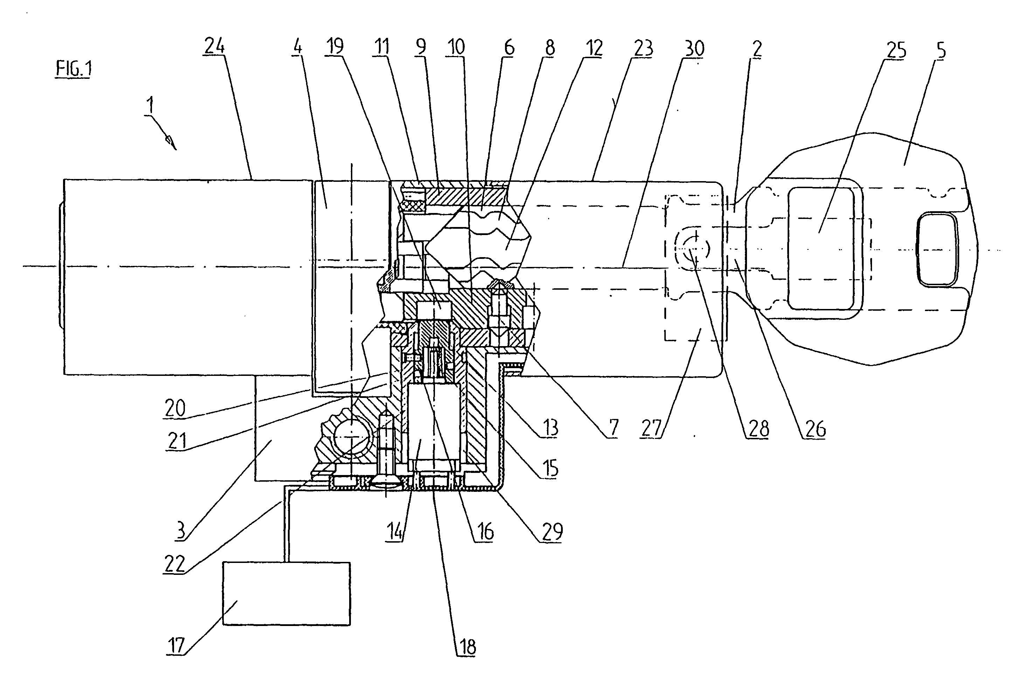

In Fig. 1 ist ein Zylinderschloss 1 mit einer erfindungsgemässen Sperreinrichtung dargestellt, wobei es sich um ein Doppelzylinderschloss mit zwei Schlosszylindem 23, 24 handelt. Diese beiden Schlosszylinder 23, 24 sind in an sich bekannter Weise über einen Steg 3 fest miteinander verbunden und mit einem Zwischenraum zueinander angeordnet, in welchem in ebenfalls bekannter Weise ein Mitnehmer 4 zur Betätigung von nicht dargestellten Schliesselementen angeordnet ist. Jeder der beiden Schliesszylinder 23, 24 des Zylinderschlosses 1 weist ein mechanisch codiertes Sperrsystem auf, welches beispielsweise gemäss der schweizerischen Patentschrift Nr. 407 799 ausgebildet ist und ein Gehäuse 11, einen Stator 9 und einen in diesem Stator 9 mittels eines Schlüssels 2 drehbaren Rotor 10 umfasst. Der dargestellte Schlüssel 2 weist an seinem Schlüsselbart 6 sowohl an den Breitseiten Nuten 8 mit Codierungen für nicht dargestellte Zuhaltungen auf, wie auch an den Schmalseiten für die sogenannten Kantenzuhaltungen 7. Mit einem passenden Schlüssel 2, welcher an den Breitseiten und an den Schmalseiten des Schlüsselbartes 6 die richtigen Codierungen aufweist, können die Sperrzuhaltungen in die Öffnungsposition gebracht und damit der mechanische Teil des Zylinderschlosses 1 entriegelt werden. Trotz der grossen Komplexität der mechanischen Codierungen 7, 8 am Schlüssel 2 ist es möglich, diese mit geeigneten Werkzeugmaschinen zu kopieren und unbefugterweise Kopien von Schlüsseln anzufertigen, welche eine Entsperrung des mechanisch codierten Teiles des Zylinderschlosses 1 ermöglichen. Um das Öffnen des Zylinderschlosses 1 mit einem Schlüssel, dessen mechanischer Teil kopiert wurde, zu verhindern, ist das dargestellte Zylinderschloss 1 mit einer zusätzlichen elektronischen Codierung versehen. Dazu ist in der Reide 5 des Schlüssels 2 ein elektronisches Bauelement 25 eingebaut, auf welchem eine elektronische Codierung gespeichert ist. Dieses Elektronikmodul, bzw. elektronische Bauelement 25 ist mit einem Leiter 26 verbunden, welcher bei vollständig in das Zylinderschloss 1 eingestecktem Schlüssel 2 mit einer Übertragungseinheit 27 am Zylinderschloss 1 zusammenwirkt. Im dargestellten Beispiel verfügt die Übertragungseinheit 27 über elektrische Kontakte 28, welche federnd an den Leiter 26 gedrückt werden und zwischen der Übertragungseinheit 27 und dem elektronischen Bauelement 25 eine leitende Verbindung herstellen. Auf diese Weise können Daten zwischen dem Schlüssel 2 und dem Zylinderschloss 1 ausgetauscht werden. Bei entsprechender Ausgestaltung des Schlüssels 2, bzw. des Zylinderschlosses 1 kann der Datenaustausch auch ohne feste Kontakte, z.B. durch Funkübertragung erfolgen. Die Übertragungseinheit 27 ist mit einer elektronischen Steuereinrichtung 17 verbunden, wobei diese Verbindung nicht dargestellt ist. Diese elektronische Steuereinrichtung 17 umfasst einen Computer, welcher abhängig von der installierten Hardund Software feststellen kann, ob der in das Zylinderschloss 1 eingesteckte Schlüssel 2 mit dem elektronischen Bauelement 25 ein Originalschlüssel ist oder nicht, oder ob andere Bedingungen erfüllt sind, wie beispielsweise Öffnungsberechtigung für das Zylinderschloss 1 in einem bestimmten Zeitbereich. Mit dieser elektronischen Steuereinrichtung 17 verbunden ist eine zusätzliche Sperreinrichtung, welche von der mechanischen Codierung der Schloss-Schlüssel-Kombination unabhängig ist und ein zusätzliches, in den Rotor 10 ein- und ausrückbares Sperrelement 13 aufweist. Das zusätzliche Sperrelement 13 ist Teil einer Einbaueinheit 22, welche in eine Bohrung 29 im Steg 3 eingebaut ist. Diese Einbaueinheit 22 umfasst ein Steuermittel 14, im beschriebenen Beispiel ein Mikromotor mit einer rotierenden Abtriebswelle 15, ein Schraubgetriebe 16 und eine Linearführung 20 für das zusätzliche Sperrelement 13, sowie ein Gehäuse 21, welches diese Teile umgibt. Das Steuermittel 14, die Abtriebswelle 15, das Schraubgetriebe 16 und das zusätzliche Sperrelement 13, bzw. deren Längsachsen liegen alle auf einer gemeinsamen Längsachse 18. Diese gemeinsame Längsachse 18 ist etwa rechtwinklig zur Drehachse 30 des Rotors 10 gerichtet. Über die elektronische Steuereinrichtung 17 wird die, von einer nicht dargestellten Energiequelle erfolgende Energiezufuhr zum Mikromotor, bzw. Steuermittel 14 gesteuert. Die vom Mikromotor, bzw. Steuermittel 14 erzeugten Drehbewegungen der Abtriebswelle 15 werden über das Schraubgetriebe 16 in Linearbewegungen des Zusätzlichen Sperrelementes 13 umgewandelt. Diese Linearbewegungen des zusätzlichen Sperrelementes 13 sind auf die gemeinsame Längsachse 18 ausgerichtet und in der Verlängerung dieser Achse 18 befindet sich im Rotor 10 eine radiale Bohrung 19, in welche das Sperrelement 13 ein-, bzw. ausgerückt werden kann. Dazu befindet sich am Sperrelement 13 ein Frontteil in der Form eines Sperrzapfens 71, welcher in der Sperrposition des Zylinderschlosses 1 in die Bohrung 19 am Rotor 10 eingreift. In der gesperrten Position des Zylinderschlosses 1 befindet sich das vordere Ende 71 des zusätzlichen Sperrelementes 13 in der Bohrung 19 am Rotor 10 und verhindert damit Drehbewegungen des Rotors 10 im Stator 9. Dies auch dann, wenn die von den mechanischen Codierungen am Schlüssel 2 betätigten mechanischen Zuhaltungen in Öffnungsposition stehen. Das zusätzliche Sperrelement 13 kann aus der Sperrposition in der Bohrung 19 am Rotor 10 nur in die Öffnungsposition zurückgezogen werden, wenn ein entsprechender Steuerbefehl von der elektronischen Steuereinrichtung 17 die Energiezufuhr zum Steuermittel 14 so freigibt, dass der rotierende Teil des Schraubgetriebes 16 in die richtige Richtung dreht. Die entsprechenden Steuerbefehle der elektronischen Steuerung 17 werden nur dann erzeugt, wenn vom elektronischen Bauelement 25 am Schlüssel 2 die richtige elektronische Codierung ausgelesen werden kann und gleichzeitig zum Zeitpunkt des Öffnungsversuches dieser Schlüssel 2 auch öffnungsberechtigt ist. Die elektronischen Codierungsdaten im elektronischen Bauelement 25 am Schlüssel 2 sind so verschlüsselt, dass sie nicht kopiert werden können. Es ist auch nicht möglich, das zusätzliche Sperrelement 13 durch Fremdeinwirkungen von aussen, z.B. durch Magnetkräfte, durch Vibrieren, Aufbringen von Schwingungen, Schlägen, usw. aus der Sperrposition in eine Öffnungsposition zu bringen. Dies ist durch die erfindungsgemässe Ausgestaltung des Schraubgetriebes 16 und die erfindungsgemässe Anordnung der Bauelemente in der Einbaueinheit 22, welche die Sperreinheit bildet, gewährleistet. Diese sehr hohe Sicherheit gegen Betätigungsversuche des zusätzlichen Sperrelementes 13 durch Fremdeinwirkungen von aussen wird einerseits durch das Fehlen von zusätzlich auf das Sperrelement 13 einwirkenden Halte- oder Rückstellkräften und anderseits durch die erfindungsgemässe Formgebung des Schraubgetriebes und die Anordnung aller mit dem zusätzlichen Sperrelement 13 zusammenhängenden Betätigungselemente auf der gemeinsamen Längsachse 18 erreicht. Die Einbaueinheit 22 mit dem zusätzlichen Sperrelement 13 kann durch die erfindungsgemässe Gestaltung sehr kompakt gebaut werden und die Länge kann so weit reduziert werden, dass ein Einbau in den Steg 3 eines Zylinderschlosses 1 mit normalen Bauabmessungen möglich ist. Die Aussenabmessungen des Zylinderschlosses 1 sind deshalb gleich gross wie bei einem nur mechanisch codierten Zylinderschloss mit der Ausnahme, dass die Länge in Richtung der Drehachse 30 grösser ist, um den Einbau der Übertragungseinheit 27 zu ermöglichen. Dies ermöglicht den Einbau eines Zylinderschlosses mit der erfindungsgemässen Sperreinrichtung in Schlosskasten und andere Bauelemente mit den genormten Aussparungen für die handelsüblichen Zylinderschlösser.

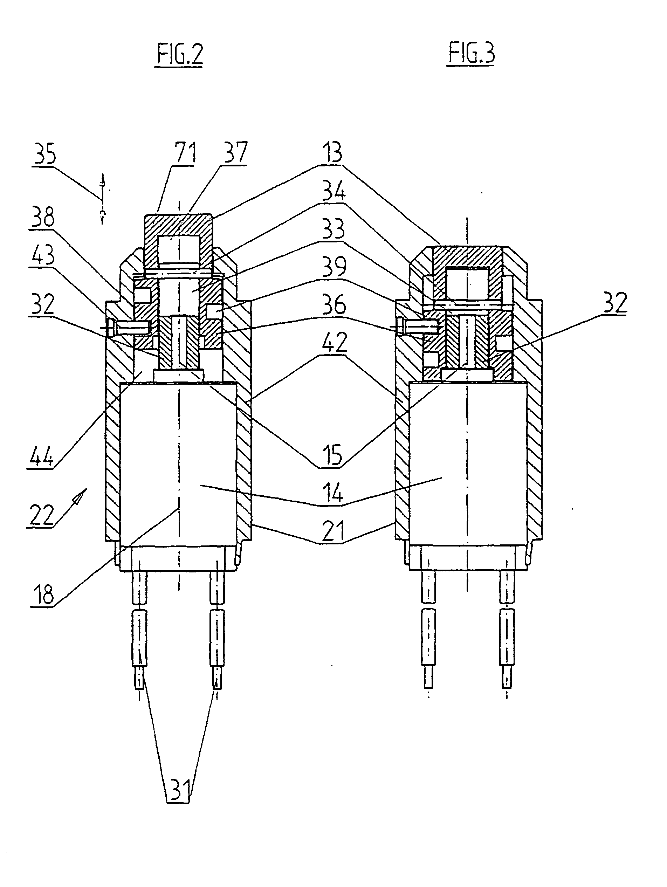

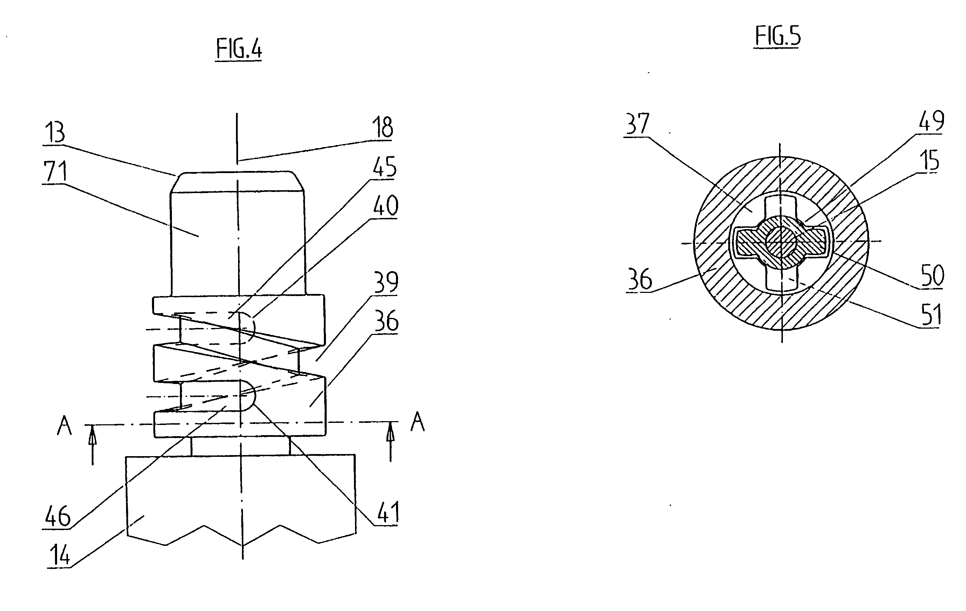

Die Figuren 2 und 3 zeigen eine Einbaueinheit 22 in vergrösserter Darstellung und in einem Längsschnitt, wobei in Fig. 2 das Sperrelement 13 in der Sperrposition dargestellt ist und in Fig. 3 in der Öffnungsposition. Am unteren Ende des Steuermittels, bzw. Mikromotors 14 sind elektrische Leiter 31 angeordnet, welche der Steuerung und Stromzuführung dienen und mit der elektronischen Steuereinrichtung 17 verbunden sind. Am oberen Ende des Steuermittels 14 befindet sich die Abtriebswelle 15, welche um die Längsachse 18 in beide Drehrichtungen rotieren kann. Auf der Abtriebswelle 15 ist drehfest ein Kupplungsteil 32 befestigt, wobei dieses Kupplungsteil 32 am oberen Ende eine Längsnute 33 aufweist, welche ein Innenelement einer Gleitnutverbindung bildet. Als Gegenstück dieser Gleitnutverbindung ist am Sperrelement 13 ein Querbolzen 34 angeordnet, welcher in die Nute 33 am Kupplungsteil 32 eingreift. Dieser Querbolzen 34 bildet ein Aussenelement der Gleitnutverbindung zwischen dem Sperrelement 13 und der Abtriebswelle 15, bzw. dem Kupplungsteil 32. Durch diese Gleitnutverbindung 33, 34 werden die Drehbewegungen der Abtriebswelle 15, bzw. des Kupplungsteiles 32 auf das Sperrelement 13 übertragen. Gleichzeitig kann sich aber das Sperrelement 13 in Richtung der Längsachse 18 linear in Richtung der Pfeile 35 verschieben. Am Sperrelement 13 ist ein Endteil 36 angeordnet, welches eine Kembohrung 37 aufweist. Zwischen dieser Kernbohrung 37 im Endteil 36, bzw. im Sperrelement 13 und dem Kupplungsteil 32 ist eine Gleitführung ausgebildet. Am Aussenmantel 38 des Endteiles 36 des Sperrelementes 13 ist eine Schraubennute 39 angeordnet. Dieses Endteil 36 mit der Schraubennute 39 bildet ein erstes Teil des Schraubgetriebes 16. Diese Schraubennute 39 ist, von unten nach oben, mit einer positiven Steigung, über 360° um das Endteil 36 gewendelt und weist am unteren und oberen Ende Anschlagflächen 40 und 41 auf, welche die Schraubennute 39 abschliessen, wie dies in Fig. 4 dargestellt ist. Ein zweites Teil des Schraubgetriebes 16 ist durch ein Gleitelement 43 in der Form eines Zapfens und eine Hülse 42, welche Teil des Gehäuses 21 ist, gebildet. Das Gleitelement 43 ist mit der Hülse 42 verbunden und ragt radial in die Bohrung 44 der Hülse 42. Der in die Bohrung 44 ragende Teil des Gleitelementes 43 greift in die Nute 39 am Endteil 36 des Sperrelementes 13 ein. Die Hülse 42 ist Bestandteil des Gehäuses 21, welches das Steuermittel 14, das Schraubgetriebe 16 und einen Teil des Sperrelementes 13 umschliesst. Das Gehäuse 21 ist, wie in Fig. 1 erkennbar, in der Bohrung 29 am Steg 3 des Zylinderschlosses 1 drehfest befestigt. Bei dem in Fig. 2 und 3 dargestellten Ausführungsbeispiel der Einbaueinheit 22 sind somit das Steuermittel 14 und dessen Abtriebswelle 15 und das Gehäuse 21 mit dem Gleitelement 43 ortsfest. Wird das Endteil 36 des Sperrelementes 13 über die Abtriebswelle 15 und die Gleitnutverbindung 33, 34 in Rotation versetzt, so wird das Sperrelement 13 wegen der Relativbewegung zwischen dem Gleitelement 43 und der Schraubennute 39 linear in Richtung der Pfeile 35 verschoben. Dadurch kann das Sperrelement 13 in Richtung der Längsachse 18 linear von der in Fig. 2 dargestellten Sperrposition in die in Fig. 3 dargestellte Öffnungsposition verschoben werden und umgekehrt. In der Sperrposition ist der Sperrzapfen 71 am Frontteil des Sperrelementes 13 aus dem Gehäuse 21 ausgefahren. Aus den Figuren 4, 6 und 7 ist die erfindungsgemässe Gestaltung der Schraubennute 39 erkennbar. Jeweils ein Endbereich 45, 46 der Spiralnute 39 ist der Öffnungsposition, bzw. Sperrposition des Sperrelementes 13 zugeordnet. Mindestens an dem Endbereich 46 der Schraubennute 39, welcher der Sperrposition zugeordnet ist, ist ein zusätzliches Längenelement 47 der Nute angeordnet, welches keine Steigung aufweist. Wie aus Fig. 4 erkennbar ist, ist im dargestellten Beispiel auch am Endbereich 45 der Schraubennute 39 ein zusätzliches Längenelement 48 ohne Steigung angeordnet. Wenn sich das Gleitelement 43 in der Sperr- oder Öffnungsposition des Sperrelementes 13 in einem der beiden Längenelemente 47, 48 ohne Steigung der Schraubennute 39 befindet, wird es formschlüssig und ohne zusätzliche Halte- oder Rückstellkräfte gehalten. Diese Relativposition zwischen Gleitelement 43 und Endteil 36 des Sperrelementes 13 lässt sich ohne Betätigung des Steuermittels 14 praktisch nicht verändern. Versuche, durch äussere Einwirkungen, wie Vibrationen und dergleichen, das Sperrelement 13 aus der Sperr- bzw. Öffnungsposition auszurücken, bzw. einzurücken scheitern deshalb vollständig. Dadurch wird die Sicherheit der Sperreinrichtung wesentlich erhöht und es ist praktisch unmöglich, ohne mechanisch und elektronisch richtig codierten Schlüssel 2 das Zylinderschloss 1 zu betätigen. Um Beschädigungen des Steuermittels 14 zu vermeiden, wird der Strom und/oder Spannungsverlauf über die elektronische Steuereinrichtung 17 überwacht und von einem Steuerprogramm verarbeitet. Wenn das Gleitelement 43 an einer der beiden Anschlagflächen 40 oder 41 der Schraubennute 39 anschlägt, werden beispielsweise die dadurch entstehenden Veränderungen von Strom und/oder Spannung am Steuermittel 14 festgestellt und nach Ablauf einer bestimmten Zeitspanne die Energiezufuhr unterbrochen. Es ist aber auch möglich über das Steuerprogramm vorgegebene Steuerzeiten zu ermitteln und die Energiezufuhr zum Steuermittel 14 nach Ablauf der Steuerzeit zu unterbrechen. Die Zufuhr der Energie zum Steuermittel 14 erfolgt intermittierend. Damit ergeben sich sehr einfache Lösungen, wobei Endschalter oder Positionssteuerungen, wie sie in anderen Fällen benötigt werden, vollständig vermieden werden können. Die Ruhemasse des Steuermittels 14 und des Schraubgetriebes 16 sowie die Bewegungsumlenkung innerhalb des Schraubgetriebes 16 gewährleisten eine sichere Positionierung des Gleitelementes 43 in den beiden Endbereichen 45 und 46 der Schraubennute 39 auch bei stromlosen Steuermittel 14.

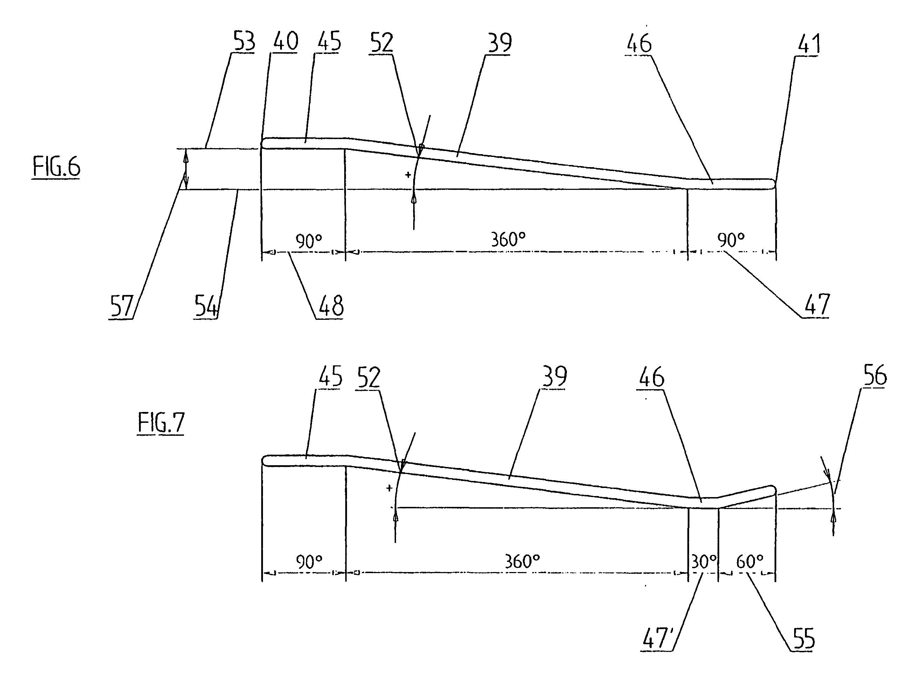

Fig. 5 zeigt einen Querschnitt entlang der Linie A-A durch das Endteil 36 in Fig. 4. Dabei ist die Gleitnutverbindung zwischen Abtriebswelle 15 und Endteil 36 des Sperrelementes 13 erkennbar, wobei hier eine weitere Ausführungsform dargestellt ist, welche von der Ausführungsform gemäss Figur 2 und 3 abweicht. An der Abtriebswelle 15 ist ein Kupplungsteil 49 drehfest befestigt, welches zwei radial nach aussen gerichtete und um 180° gegeneinander versetzte Keile 50 aufweist. In der Kernbohrung 37 des Endteiles 36, bzw. Sperrteiles 13 sind vier längsgerichtete und je um 90° versetzte Keilbahnen 51 angeordnet, in welche die Keile 50 formschlüssig und gleitend eingreifen. Diese Ausgestaltung der Gleitnutverbindung 50, 51 ermöglicht eine einfachere Positionierung des Sperrelementes 13 auf dem Kupplungsteil 32, bzw. auf der Abtriebswelle 15 bei der Montage. Bei Bedarf kann die Gleitnutverbindung auch mit einer Polygonverbindung ausgebildet werden.

Fig. 6 zeigt eine schematische Darstellung der Formgestaltung der Schraubennute 39 am ersten Teil 36 des Schraubgetriebes 16. Die dargestellte Abwicklung entspricht dabei der Anordnung gemäss Fig. 4. Die Schraubennute 39 umfasst einen Hubbereich mit einer positiven Steigung 52 mit den Endbereichen 45 und 46. Der Endbereich 45 befindet sich dabei auf einer oberen Positionsebene 53 und der Endbereich 46 auf einer unteren Positionsebene 54. Die Hubdifferenz zwischen diesen beiden Positionsebenen 53, 54 bildet den Hubweg 57 und entspricht dem linearen Verschiebeweg des Sperrelementes 13 aus der Sperrposition in die Öffnungsposition und umgekehrt. Der Hubbereich der Schraubennute 39 erstreckt sich gemäss diesem Beispiel über 360°, d.h. entspricht einem Umgang um das Endteil 36. Die zusätzlichen Längenelemente 47 und 48, welche sich in den Endbereichen 46 und 45 an den Hubbereich anschliessen, weisen keine Steigung auf und erstrecken sich über einen Drehbereich von 90°. Diese beiden zusätzlichen Längenelemente 47 und 48 der Schraubennute 39 ohne Steigung liegen je in einer Radialebene zur Längsachse 18.

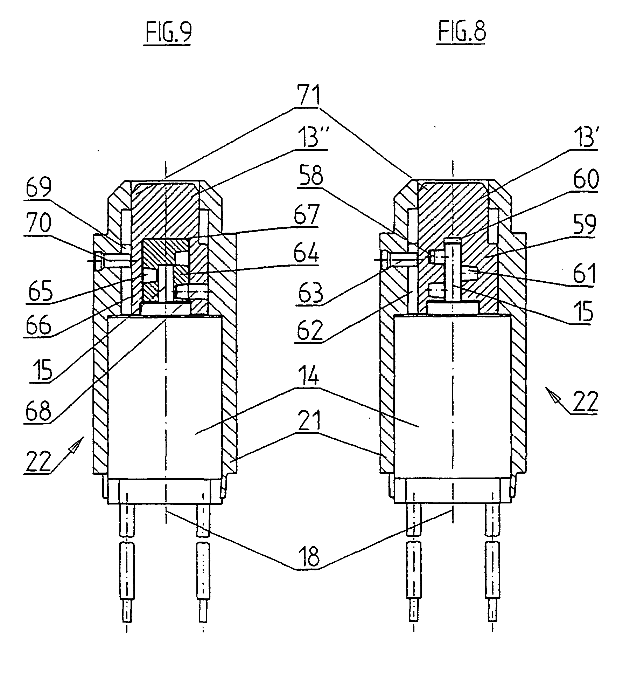

In Fig. 7 ist eine zusätzliche vorteilhafte Ausgestaltung der Schraubennute 39 an mindestens einem der Endbereiche 45, bzw. 46 dargestellt. Dabei wird insbesondere am Endbereich 46 der Schraubennute 39 das zusätzliche Längenelement 47', welches keine Steigung aufweist, verkürzt und dafür ein zusätzliches Längenelement 55 angefügt, welches eine negative Steigung 56 aufweist. Durch diese zusätzliche Richtungsänderung im Bereiche der Sperrposition wird die Sicherheit gegen unbefugte Einwirkungen noch zusätzlich erhöht. Das zusätzliche Längenelement 47' ohne Steigung kann beispielsweise auf einen Bereich von 30° verkürzt werden, und das zusätzliche Längenelement 55 mit negativer Steigung 56 kann sich beispielsweise über einen Bereich von 60° erstrecken.

In Fig. 8 ist eine Einbaueinheit 22 mit einem Sperrelement 13' dargestellt, welche eine zweite Ausführungsform eines Schraubgetriebes 16 aufweist. Dabei ist an der Abtriebswelle 15 des Steuermittels 14 ein Gleitelement 58 in der Form eines Radialnockens befestigt. Am Sperrelement 13' ist ein Endteil 59 mit einer Innenbohrung 60 angeordnet. In die Wandung dieser Innenbohrung 60 ist wiederum eine Schraubennute 61 eingearbeitet, welche bezüglich Steigung und Hubbereiche, sowie Endbereichen gleich ausgestaltet ist wie zu den Fig. 4, 6 und 7 beschrieben. Auch hier ist der Endbereich 45 der Schraubennute 39 der Öffnungsposition zugeordnet und der Endbereich 46 der Sperrposition. Das Gleitelement 58, welches mit der Abtriebswelle 15 verbunden ist, greift in diese Schraubennute 61 ein und ist in dieser verschiebbar. Am Aussenmantel des Endteiles 59 ist eine Verdrehsicherung angeordnet, welche aus einer Längsnute 62 in diesem Aussenmantel und einem Führungszapfen 63, welcher am Gehäuse 21 befestigt ist und in die Nute 62 eingreift, besteht. Dadurch ist das Sperrelement 13' und das damit verbundene Endteil 59 nur in Richtung der Längsachse 18 linear verschiebbar und kann nicht um die Längsachse 18 verdreht werden. Drehbewegungen der Abtriebswelle 15 um die Längsachse 18 bewirken deshalb durch die Relativbewegung zwischen dem Gleitelement 58 und der Schraubennute 61 Linearbewegungen des Sperrelementes 13' in Richtung der Längsachse 18 und damit die gewünschten Verschiebungen des Sperrzapfens 71 von der Sperrposition in die Öffnungsposition und umgekehrt. Bei dieser Ausführungsform bildet das Endteil 59, welches fest mit dem Sperrelement 13' verbunden ist, das erste Teil des Schraubgetriebes 16. Das zweite Teil des Schraubgetriebes 16 ist durch das Gleitelement 58 an der Abtriebswelle 15 gebildet. Dabei ist das Gleitelement 58 gegenüber dem Sperrelement 13' beweglich.

Die in Fig. 9 dargestellte Einbaueinheit 22 weist eine weitere Ausführungsform des Schraubgetriebes 16 auf. Bei dieser Ausführungsform ist an der Abtriebswelle 15 ein zylindrisches Bauteil 64 drehfest befestigt. In die äussere Mantelfläche dieses zylindrischen Bauteiles 64 ist die Schraubennute 65 eingearbeitet. Form und Ausgestaltung dieser Schraubennute 65 entsprechen auch hier den Ausführungen gemäss Fig. 4, 6 und 7. Bei dieser Bauvariante ist jedoch der Endbereich 47 der Schraubennute 39 der Öffnungsposition und der Endbereich 45 der Sperrposition zugeordnet. Am Sperrelement 13" ist wiederum ein Endteil 66 mit einer Innenbohrung 67 angeordnet. In diese Innenbohrung 67 greift das zylindrische Bauteil 64 ein und zwischen dem Aussenmantel dieses zylindrischen Bauteiles 64 und der Innenbohrung 67 ist eine Gleitführung gebildet. Am Endteil 66 ist im weiteren ein Gleitelement 68 in der Form eines Führungszapfens angeordnet, wobei dieses Gleitelement 68 radial in die Innenbohrung 67 ragt und in die Schraubennute 65 am zylindrischen Bauteil 64 eingreift. Am Aussenmantel des Endteiles 66 ist wiederum eine Längsnute 69 eingearbeitet, in welche ein Führungszapfen 70 eingreift, welcher am Gehäuse 21 befestigt ist. Dadurch kann das Sperrelement 13", bzw. dessen Endteil 66 nicht um die Längsachse 18 verdreht werden, es ist jedoch möglich, das Sperrelement 13" linear entlang dieser Längsachse 18 zu verschieben. Drehbewegungen der Abtriebswelle 15, bzw. des zylindrischen Bauteiles 64 um die Längsachse 18 bewirken deshalb über das Gleitelement 68 und die Schraubennute 65 eine Linearverschiebung des Sperrelementes 13" in Richtung der Längsachse 18. Damit ist wiederum die lineare Verschiebung des Sperrelementes 13", bzw. des Sperrzapfens 71 von einer Sperrposition in eine Öffnungsposition und umgekehrt möglich. Bei dieser Ausführungsform bildet das zylindrische Bauteil 64 an der Abtriebswelle 15 das erste Teil des Schraubgetriebes 16. Das zweite Teil des Schraubgetriebes 16 ist durch das am Endteil 66 befestigte Gleitelement 68 gebildet. Dabei ist das Endteil 66 und damit das Gleitelement 68 fest mit dem Sperrelement 13" verbunden.

## Patentansprüche

1. Sperreinrichtung für ein Zylinderschloss (1) mit einem Stator (9), einem in diesem Stator (9) mittels eines Schlüssels (2) drehbaren Rotor (10), einem zusätzlichen, entlang einer Verschiebeachse linear in den Rotor (10) einund ausrückbaren Sperrelement (13) und einem elektrisch angetriebenen Steuermittel (14) zur Betätigung dieses Sperrelementes (13), wobei das Steuermittel (14) eine rotierende Abtriebswelle (15) aufweist, einem Schraubgetriebe (16), welches zwischen dem Steuermittel (14) und dem Sperrelement (13) angeordnet ist, sowie einer elektronischen Steuereinrichtung (17) zur Erzeugung von Steuersignalen für das Steuermittel (14), **dadurch gekennzeichnet, dass** die Abtriebswelle (15) des Steuermittels (14), die Drehachse des Schraubgetriebes (16) sowie das Sperrelement (13; 13'; 13") und dessen lineare Führung (20) auf einer gemeinsamen Längsachse (18) angeordnet sind, ein erstes Teil des Schraubgetriebes (16) mit einer Schraubennute (39; 61; 65) ausgestattet ist, wobei diese Schraubennute (39; 61; 65) an einer Mantelfläche um die gemeinsame Längsachse (18) angeordnet ist, die Schraubennute (39; 61; 65) in Richtung der Längsachse (18) eine Strecke von begrenzter Länge und mit vorgegebener positiver Steigung (52) aufweist, wobei ein Endbereich (46, 45) der Nute (39; 61; 65) der Sperrposition des Sperrelementes (13; 13'; 13") und der andere Endbereich (45, 46) der Nute (39; 61; 65) der Öffnungsposition des Sperrelementes (13; 13'; 13") zugeordnet ist, an mindestens dem, der Sperrposition zugeordneten, Endbereich (46, 45) der Schraubennute (39; 61; 65) ein Längenelement (47, 48) der Nute (39: 61; 65) angeordnet ist, welches keine Steigung aufweist, beide Enden der Nute (39; 61; 65) mit Anschlagflächen (40, 41) abgeschlossen sind, ein zweites Teil des Schraubgetriebes (16) ein in die Schraubennute (39) eingreifendes Gleitelement (43; 58; 68) aufweist und das erste Teil (36; 59) oder das zweite Teil (66) des Schraubgetriebes (16) fest mit dem Sperrelement (13; 13'; 13") verbunden ist.

2. Sperreinrichtung nach Patentanspruch 1, **dadurch gekennzeichnet, dass** an der Abtriebswelle (15) ein zylindrisches Bauteil (64) befestigt ist und in die äussere Mantelfläche dieses Bauteiles (64) die Schraubennute (65) eingeformt ist, wobei dieses Bauteil (64) das erste Teil des Schraubgetriebes (16) bildet, das Sperrelement (13") ein Endteil (66) mit einer Innenbohrung (67) aufweist, das zylindrische Bauteil (64) an der Abtriebswelle (15) in diese Innenbohrung (67) eingreift, zwischen dieser Innenbohrung (67) und dem Aussenmantel des zylindrischen Bauteiles (64) eine Gleitführung gebildet ist und am Endteil (66), welches das zweite Teil des Schraubgetriebes (16) bildet, das Gleitelement (68) angeordnet ist, wobei dieses Gleitelement (68) radial in die Bohrung (67) ragt und in die Schraubennute (65) am Aussenmantel des zylindrischen Bauteiles (64) eingreift.

3. Sperreinrichtung nach Patentanspruch 1, **dadurch gekennzeichnet, dass** das Sperrelement (13') ein Endteil (59) mit einer Innenbohrung (60) aufweist, in die Mantelfläche dieser Bohrung (60) die Schraubennute (61) eingeformt ist, wobei dieses Endteil (59) das erste Teil des Schraubgetriebes (16) bildet, die Abtriebswelle (15) in diese Innenbohrung (60) eingreift, zwischen dieser Innenbohrung (60) und dem Aussenmantel der Abtriebswelle (15) eine Gleitführung gebildet ist und an der Abtriebswelle (15), welche das zweite Teil des Schraubgetriebes (16) bildet, das Gleitelement (58) angeordnet ist, wobei dieses Gleitelement (58) radial nach aussen ragt und in die Schraubennute (61) in der Bohrung (60) am Endteil des Sperrelementes (13') eingreift.

4. Sperreinrichtung nach Patentanspruch 1, **dadurch gekennzeichnet, dass** das Sperrelement (13) ein Endteil (36) mit einer Kernbohrung (37) aufweist, in dieser Kembohrung (37) Aussenelemente (34) einer Gleitnutverbindung angeordnet sind, die Abtriebswelle (15) oder ein mit der Abtriebswelle (15) verbundenes Kupplungsteil (32) Innenelemente (33) einer Gleitnutverbindung aufweist und in diese Kembohrung (37) eingreift, wobei die Aussenelemente (34) und die Innenelemente (33) dieser Gleitnutverbindung so zusammenwirken, dass das Sperrelement (13) gegenüber der Abtriebswelle (15) in Richtung der Längsachse verschiebbar ist, am Aussenmantel (35) des Endteiles (36) des Sperrelementes (13) die Schraubennute (39) eingearbeitet ist, wobei dieses Endteil (36) das erste Teil des Schraubgetriebes (16) bildet, dieses Endteil (36) in einer feststehenden Hülse (42) gleitend geführt ist, am Innenmantel dieser Hülse (42), welche einen Teil des zweiten Teiles des Schraubgetriebes (16) bildet, das Gleitelement (43) angeordnet ist und dieses Gleitelement (43) radial in die Bohrung (44) der Hülse (42) ragt und in die Schraubennute (39) am Aussenmantel (38) des Endteiles (36) des Sperrelementes (13) eingreift.

5. Sperreinrichtung nach einem der Patentansprüche 1 bis 4, **dadurch gekennzeichnet, dass** mindestens an einen Endbereich (45, 46) der Nute (39; 61; 65) mit positiver Steigung oder an ein Längenelement (47, 48) der Nute (39; 61; 65) ohne Steigung ein zusätzliches Längenelement (55) der Nute (39) mit negativer Steigung (56) anschliesst.

6. Sperreinrichtung nach einem der Patentansprüche 1 bis 5, **dadurch gekennzeichnet, dass** das Sperrelement (13; 13'; 13") ein Frontteil in der Form eines Sperrzapfens (71) aufweist und dieser Sperrzapfen (71) in der Sperrposition des Zylinderschlosses (1) in eine etwa radiale Bohrung (19) am Rotor (10) eingreift.

7. Sperreinrichtung nach einem der Patentansprüche 1 bis 6, **dadurch gekennzeichnet, dass** in der Sperrposition des Zylinderschlosses (1) das Gleitelement (43; 58; 68) in einem der Längenelemente (47, 48, 55) der Nute (39; 61; 65) positioniert ist, welches keine positive Steigung aufweist und an demjenigen Endbereich (45, 46) der Nute (39; 61; 65) angeordnet ist, welcher der Sperrposition des Sperrelementes (13; 13'; 13") zugeordnet ist.

8. Sperreinrichtung nach einem der Patentansprüche 1 bis 7, **dadurch gekennzeichnet, dass** das Sperrelement (13; 13'; 13") in Richtung der Längsachse (18) von einer Sperrposition in eine Öffnungsposition und umgekehrt verschiebbar ist und die Länge des Verschiebeweges zwischen der Sperrposition und der Öffnungsposition dem Hubweg (57) der Schraubennute (39; 61; 65) am Schraubgetriebe (16) entspricht.

9. Sperreinrichtung nach einem der Patentansprüche 1 bis 8, **dadurch gekennzeichnet, dass** das elektrisch angetriebene Steuermittel (14) und das Schraubgetriebe (16) im Bereiche des Steges (3) des Zylinderschlosses (1) angeordnet sind und die Längsachse (18) etwa radial zur Drehachse (30) des Rotors (10) gerichtet ist.

10. Sperreinrichtung nach einem der Patentansprüche 1 bis 9, **dadurch gekennzeichnet, dass** das Sperrelement (13; 13'; 13") in der Sperr- und Öffnungsposition formschlüssig und in Richtung der Längsachse (18) frei von zusätzlichen Halte- oder Rückstellkräften gehalten ist.

11. Sperreinrichtung nach einem der Patentansprüche 1 bis 10, **dadurch gekennzeichnet, dass** ein Teil des Sperrelementes (13; 13'; 13"), das Schraubgetriebe (16), die Abtriebswelle (15) und mindestens ein Teil des Steuermittels (14) von einem Gehäuse (21) umgeben sind und mit diesen Elementen (13, 16, 15, 14) und diesem Gehäuse (21) eine elektromechanische Einbaueinheit (22) gebildet ist.

12. Verfahren zum Betrieb der Sperreinrichtung gemäss Patentanspruch 1, **dadurch gekennzeichnet, dass** ein Steuersignal der elektronischen Steuereinrichtung (17) das Steuermittel (14) aktiviert und dadurch dessen Abtriebswelle (15) in Rotation versetzt wird, durch die rotierende Abtriebswelle (15) das Schraubgetriebe (16) in Drehung versetzt wird, mittels des Schraubgetriebes (16) die drehende Bewegung der Abtriebswelle (15) direkt in eine lineare Bewegung des Sperrelementes (13; 13'; 13") umgesetzt wird, durch diese lineare Bewegung das Sperrelement (13; 13'; 13") in Richtung der Längsachse (18) von einer Sperrposition in eine Öffnungsposition oder umgekehrt verschoben und in den Rotor (10) ein- oder ausgerückt wird und auf das Sperrelement (13; 13'; 13"), während des Verschiebevorganges und in den Sperr- und Öffnungspositionen, keine zusätzlichen Halte- und oder Rückstellkräfte ausgeübt werden.

13. Verfahren nach Patentanspruch 12, **dadurch gekennzeichnet, dass** die Rotationsbewegung der Abtriebswelle (15) mit Hilfe von Endanschlägen (40, 41) am Schraubgetriebe (16) gestoppt wird, die Steuereinrichtung (17) den Stillstand der Abtriebswelle (15) und damit des Steuermittels (14) feststellt und nach Ablauf einer vorbestimmten Steuerzeit die Energiezufuhr zum Steuermittel (14) unterbrochen wird.

14. Verfahren nach Patentanspruch 12 oder 13, **dadurch gekennzeichnet, dass** die Steuereinrichtung (17) durch Informationssignale aktiviert wird, welche direkt über Kontaktelemente (28) oder über ein kontaktloses Sender/-Empfänger-System von einem mobilen Informationsträger (2, 25) an die Steuereinrichtung (17) des Zylinderschlosses (1) übertragen werden.

15. Verfahren nach einem der Patentansprüche 12 bis 14, **dadurch gekennzeichnet, dass** das Steuermittel (14) während der aktiven Zeit intermittierend mit Energie versorgt wird.

## Claims

1. A blocking device for a cylinder lock (1) having a stator (9), a rotor (10) which can be turned in this stator (9) by means of a key (2), an additional blocking element (13) which can be moved into and out of the rotor (10) along an axis of displacement, and an electrically driven control means (14) for actuating this blocking element (13), the control means (14) having a rotating driven shaft (15), a helical gear (16) which is arranged between the control means (14) and the blocking element (13) and an electronic control device (17) for generating control signals for the control means (14), **characterised in that** the driven shaft (15) of the control means (14), the turning axis of the helical gear (16) and also the blocking element (13; 13'; 13") and its linear guide (20) are arranged on a common longitudinal axis (18), a first part of the helical gear (16) is provided with a helical groove (39; 61; 65), this helical groove (39; 61; 65) being arranged on a curved surface about the common longitudinal axis (18), the helical groove (39; 61; 65) has a section of delimited length and predetermined positive pitch (52) in the direction of the longitudinal axis (18), an end region (46, 45) of the groove (39; 61; 65) being associated with the blocking position of the blocking element (13; 13' 13") and the other end region (45, 46) of the groove (39; 61; 65) being associated with the opening position of the blocking element (13, 13', 13"), a linear element (47, 48) of the groove (39; 61; 65) is arranged on at least that end region of the helical groove (39; 61; 65) which is associated with the blocking position, said longitudinal element having no pitch, both ends of the groove (39; 61; 65) are terminated by stop faces (40, 41), a second part of the helical gear (16) has a sliding element (43; 58; 68) which engages in the helical groove (39), and the first part (36; 59) or the second part (66) of the helical gear (16) is fixedly connected to the blocking element (13; 13'; 13").

2. A blocking device according to Claim 1, **characterised in that** a cylindrical component (64) is fixed to the driven shaft (15) and the helical groove (65) is integrally formed in the outer curved surface of this component (64), this component (64) forming the first part of the helical gear (16), the blocking element (13") has an end part (66) having an internal bore (67), the cylindrical component (64) on the driven shaft (15) engages in this internal bore (67), a slideway is formed between this internal bore (67) and the outer surface of the cylindrical component (64) and the sliding element (68) is arranged on the end part (66) which forms the second part of the helical gear (16), this sliding element (68) projecting radially into the bore (67) and engaging in the helical groove (65) on the outer surface of the cylindrical component (64).

3. A blocking device according to Claim 1, **characterised in that** the blocking element (13') has an end part (59) having an internal bore (60), the helical groove (61) is integrally formed in the curved surface of this bore (60), this end part (59) forming the first part of the helical gear (16), the driven shaft (15) engages in this internal bore (60), a slideway is formed between this internal bore (60) and the outer surface of the driven shaft (15) and the sliding element (58) is arranged on the driven shaft (15) which forms the second part of the helical gear (16), this sliding element (58) projecting radially outwards and engaging in the helical groove (61) in the bore (60) on the end part of the blocking element (13').

4. A blocking device according to Claim 1, **characterised in that** the blocking element (13) has an end part (36) with a core bore (37), outer elements (34) of a slide/groove connection are arranged in this core bore (37), the driven shaft (15), or a coupling part (32) connected to the driven shaft (15), has inner elements (33) of a slide/groove connection and engages in this core bore (37), the outer elements (34) and the inner elements (33) of this slide/groove connection cooperating such that the blocking element (13) is displaceable in the direction of the longitudinal axis with respect to the driven shaft (15), the helical groove (39) is incorporated in the outer surface (35) of the end part (36) of the blocking element (13), this end part (36) forming the first part of the helical gear (16), this end part (36) is guided in sliding manner in a fixed sleeve (42), the sliding element (43) is arranged on the inner surface of this sleeve (42), which forms part of the second part of the helical gear (16), and this sliding element (43) projects radially into the bore (44) in the sleeve (42) and engages in the helical groove (39) in the outer surface (38) of the end part (36) of the blocking element (13).

5. A blocking device according to one of Claims 1 to 4, **characterised in that** an additional linear element (55) of the groove (39) with a negative pitch (56) adjoins at least one end region (45, 46) of the groove (39; 61; 65) with a positive pitch, or a linear element (47, 48) of the groove (39; 61; 65) with no pitch.

6. A blocking device according to one of Claims 1 to 5, **characterised in that** the blocking element (13; 13'; 13") has a front part in the form of an indexing pin (71) and this indexing pin (71) engages in an approximately radial bore (19) in the rotor (10) in the blocking position of the cylinder lock (1).

7. A blocking device according to one of Claims 1 to 6, **characterised in that**, in the blocking position of the cylinder lock (1), the sliding element (43; 58; 68) is positioned in one of the linear elements (47, 48, 55) of the groove (39; 61; 64), which does not have a positive pitch and is arranged on that end region (45, 46) of the groove (39; 61; 65) which is associated with the blocking position of the blocking element (13, 13' 13").

8. A blocking device according to one of Claims 1 to 7, **characterised in that** the blocking element (13, 13' 13") is displaceable from a blocking position into an opening position, and vice versa, in the direction of the longitudinal axis (18) and the length of the displacement path between the blocking position and the opening position corresponds to the elevation (57) of the helical groove (39; 61; 65) on the helical gear (16).

9. A blocking device according to one of Claims 1 to 8, **characterised in that** the electrically driven control means (14) and the helical gear (16) are arranged in the region of the web (3) of the cylinder lock (1), and the longitudinal axis (18) is directed approximately radially to the turning axis (30) of the rotor (10).

10. A blocking device according to one of Claims 1 to 9, **characterised in that** the blocking element (13, 13', 13") is held with form fit in the blocking and opening position and without additional holding or resetting forces in the direction of the longitudinal axis (18).

11. A blocking device according to one of Claims 1 to 10, **characterised in that** part of the blocking element (13, 13', 13"), the helical gear (16), the driven shaft (15) and at least part of the control means (14) are surrounded by a housing (21) and an integrated electromechanical unit (22) is formed by these elements (13, 16, 15, 14) and this housing (21).

12. A process for operating the blocking device according to Claim 1, **characterised in that** a control signal from the electronic control device (17) activates the control means (14) and thereby starts to rotate its driven shaft (15), the rotating driven shaft (15) starts turning the helical gear (16), the helical gear (16) converts the turning movement of the driven shaft (15) directly into a linear movement of the blocking element (13, 13', 13"), this linear movement displaces the blocking element (13, 13', 13") from a blocking position into an opening position, or vice versa, in the direction of the longitudinal axis (18) and moves it into or out of the rotor (10), and no additional holding and/ or resetting forces are exerted on the blocking element (13, 13', 13") during the displacement procedure and in the blocking and opening positions.

13. A process according to Claim 12, **characterised in that** the rotational movement of the driven shaft (15) is stopped with the aid of end stops (40, 41) on the helical gear (16), the control device (17) determines the stationary position of the driven shaft (15) and therefore the control means (14), and the power supply to the control means (14) is interrupted after expiry of a predetermined control time.

14. A process according to Claim 12 or 13, **characterised in that** the control device (17) is activated by information signals which are transmitted directly from a mobile information carrier (2, 25) to the control device (17) of the cylinder lock (1) via contact elements (28) or via a contactless transmitter/receiver system.

15. A process according to one of Claims 12 to 14, **characterised in that** power is supplied to the control means (14) intermittently during the active time.

## Revendications

1. Dispositif de verrouillage pour serrure à barillet (1) comprenant un stator (9), un rotor (10) que l'on peut faire tourner dans ce stator (9) au moyen d'une clé (2), un élément de verrouillage supplémentaire (13) qui peut entrer et sortir linéairement dans le rotor (10) le long d'un axe de translation, et un moyen de commande (14) entraîné électriquement pour commander cet élément de verrouillage (13), le moyen de commande (14) présentant un arbre de sortie rotatif (15), un engrenage hélicoïdal (16), qui est aménagé entre le moyen de commande (14) et l'élément de verrouillage (13), ainsi qu'un dispositif de commande électronique (17) pour produire des signaux de commande pour le moyen de commande (14), **caractérisé en ce que** l'arbre de sortie (15) du moyen de commande (14), l'axe de rotation de l'engrenage hélicoïdal (16) ainsi que l'élément de verrouillage (13; 13'; 13") et leur guidage linéaire (20) sont aménagés sur un axe longitudinal commun (18), une première partie de l'engrenage hélicoïdal (16) est équipée d'une cannelure hélicoïdale (39; 61; 65), où cette cannelure hélicoïdale (39; 61; 65) est aménagée sur une surface enveloppe autour de l'axe longitudinal commun (18), la cannelure hélicoïdale (39; 61; 65) présente, dans la direction de l'axe longitudinal (18), un segment de longueur limitée et de pente positive prédéterminée (52), où une zone d'extrémité (46, 45) de la cannelure (39; 61; 65) est affectée à la position de verrouillage de l'élément de verrouillage (13; 13'; 13") et l'autre zone d'extrémité (45, 46) de la cannelure (39; 61; 65) à la position d'ouverture de l'élément de verrouillage (13; 13'; 13"), sur au moins la zone d'extrémité (45, 46), affectée à la position de verrouillage, de la cannelure hélicoïdale (39; 61; 65) est agencé un élément longitudinal (47, 48) de la cannelure (39; 61; 65), qui ne présente pas de pente, les deux extrémités de la cannelure (39; 61; 65) sont fermées par des surfaces de butée (40, 41), une deuxième partie de l'engrenage hélicoïdal (16) présente un élément glissant (43; 58; 68) s'engageant dans la cannelure hélicoïdale (39) et la première partie (36; 59) ou la deuxième partie (66) de l'engrenage hélicoïdal (16) est reliée fixe à l'élément de verrouillage (13; 13'; 13").

2. Dispositif de verrouillage selon la revendication 1, **caractérisé en ce que**, sur l'arbre de sortie (15) est fixée une pièce cylindrique (64) et dans la surface enveloppe externe de cette pièce (64) est ménagée la cannelure hélicoïdale (16), où cette pièce (64) forme la première partie de l'engrenage hélicoïdal (16), l'élément de verrouillage (13") présente une partie d'extrémité (66) avec un orifice interne (67), la pièce cylindrique (64) sur l'arbre de sortie (15) s'engage dans cet orifice interne (67), un guidage glissant est formé entre cet orifice interne (67) et l'enveloppe externe de la pièce cylindrique (64) et l'élément glissant (68) est agencé sur la partie d'extrémité (66) qui forme la deuxième partie de l'engrenage hélicoïdal (16), cet élément glissant (68) dépassant radialement dans l'orifice (67) et s'engageant dans la cannelure hélicoïdale (65) sur l'enveloppe externe de la pièce cylindrique (64).

3. Dispositif de verrouillage selon la revendication 1, **caractérisé en ce que** l'élément de verrouillage (13') présente une partie d'extrémité (59) avec un orifice interne (60), la cannelure hélicoïdale (61) est ménagée dans la surface enveloppe de cet orifice (60), où cette partie d'extrémité (59) forme la première partie de l'engrenage hélicoïdal (16), l'arbre de sortie (15) s'engage dans cet orifice interne (60), un guidage glissant est formé entre cet orifice interne (60) et l'enveloppe externe de l'arbre de sortie (15) et sur l'arbre de sortie (15), qui forme la deuxième partie de l'engrenage hélicoïdal (16), est agencé l'élément glissant (58), cet élément glissant (58) dépassant radialement vers l'extérieur et s'engageant dans la cannelure hélicoïdale (61) dans l'orifice (60) sur la partie d'extrémité de l'élément de verrouillage (13').

4. Dispositif de verrouillage selon la revendication 1, **caractérisé en ce que** l'élément de verrouillage (13) présente une partie d'extrémité (36) avec un orifice central (37), des éléments externes (34) d'une liaison à rainure glissante sont agencés dans cet orifice central (37) ou une partie de couplage (32) reliée à l'arbre de sortie (15) présente des éléments internes (33) d'une liaison à rainure glissante et s'engage dans cet orifice central (37), où les éléments externes (34) et les éléments internes (33) de cette liaison à rainure glissante coopèrent de _sorte que l'élément de verrouillage (13) puisse se déplacer par rapport à l'arbre de sortie (15) dans la direction de l'axe longitudinal, la cannelure hélicoïdale (39) est ménagée sur l'enveloppe externe (35) de la partie d'extrémité (36) de l'élément de verrouillage (13), où cette partie d'extrémité (36) forme la première partie de l'engrenage hélicoïdal (16), cette partie d'extrémité (36) est guidé à glissement dans une douille fixe (42), l'élément glissant (43) est agencé sur l'enveloppe interne de cette douille (42) qui forme une partie de la deuxième partie de l'engrenage hélicoïdal (16) et cet élément glissant (43) dépasse radialement dans l'orifice (44) de la douille (42) et s'engage dans la cannelure hélicoïdale (39) sur l'enveloppe externe (38) de la partie d'extrémité (36) de l'élément de verrouillage (13).

5. Dispositif de verrouillage selon l'une quelconque des revendications 1 à 4, **caractérisé en ce qu'**au moins à une zone d'extrémité (45, 46) de la cannelure (39; 61; 65) de pente positive ou à un élément longitudinal (47, 48) de la cannelure (39; 61; 65) sans pente se raccorde un élément longitudinal supplémentaire (55) de la cannelure (39) de pente négative (56).

6. Dispositif de verrouillage selon l'une quelconque des revendications 1 à 5, **caractérisé en ce que** l'élément de verrouillage (13; 13'; 13") présente une partie frontale sous la forme d'un tourillon de verrouillage (71) et ce tourillon de verrouillage (71 s'engage dans un orifice plus ou moins radial (19) du rotor (10) en position de verrouillage de la serrure à barillet (1).

7. Dispositif de verrouillage selon l'une quelconque des revendications 1 à 6, **caractérisé en ce qu'**en position de verrouillage de la serrure à barillet (1), l'élément glissant (43; 58; 68) est positionné dans un des éléments longitudinaux (47, 48, 55) de la cannelure (39; 61; 65), qui ne présente pas de pente positive et est agencé sur la zone d'extrémité (45, 46) de la cannelure (39; 61; 65) qui est affectée à la position de verrouillage de l'élément de verrouillage (13; 13'; 13").

8. Dispositif de verrouillage selon l'une quelconque des revendications 1 à 7, **caractérisé en ce que** l'élément de verrouillage (13; 13'; 13") peut se déplacer dans la direction de l'axe longitudinal (18) d'une position de verrouillage à une position d'ouverture et vice versa et la longueur du trajet de coulissement entre la position de verrouillage et la position d'ouverture correspond au trajet de course (57) de la cannelure hélicoïdale (39; 61; 65) sur l'engrenage hélicoïdal (16).

9. Dispositif de verrouillage selon l'une quelconque des revendications 1 à 8, **caractérisé en ce que** le moyen de commande (14) entraîné électriquement et l'engrenage hélicoïdal (16) sont agencés dans la zone de la barrette (3) de la serrure à barillet (1) et l'axe longitudinal (18) est dirigé plus ou moins radialement par rapport à l'axe de rotation (30) du rotor (10).

10. Dispositif de verrouillage selon l'une quelconque des revendications 1 à 9, **caractérisé en ce que** l'élément de verrouillage (13; 13'; 13") est maintenu mécaniquement en position de verrouillage et en position d'ouverture et est exempt de forces de retenue ou de rappel supplémentaires dans la direction de l'axe longitudinal (18).

11. Dispositif de verrouillage selon l'une quelconque des revendications 1 à 10, **caractérisé en ce qu'**une partie de l'élément de verrouillage (13; 13'; 13"), l'engrenage hélicoïdal (16), l'arbre de sortie (15) et au moins une partie du moyen de commande (14) sont entourés d'un boîtier (21) et une unité de montage électromécanique (22) est formée par ces éléments (13, 16, 15, 14) et ce boîtier (21).

12. Procédé de commande du dispositif de verrouillage selon la revendication 1, **caractérisé en ce qu'**un signal de commande du dispositif de commande électronique (17) active le moyen de commande (14) et, par suite, son arbre de sortie rotatif (15) est entraîné en rotation, l'engrenage hélicoïdal (16) est entraîné en rotation par l'arbre de sortie rotatif (15), le mouvement de rotation de l'arbre de sortie (15) est converti directement au moyen de l'engrenage hélicoïdal (16), en un mouvement linéaire de l'élément de verrouillage (13; 13'; 13"), ce mouvement linéaire fait se déplacer l'élément de verrouillage (13; 13'; 13") dans la direction de l'axe longitudinal (18) d'une position de verrouillage dans une position d'ouverture ou vice versa et le fait entrer dans le rotor (10) ou sortir de celui-ci et, au cours de l'opération de déplacement et dans les positions de verrouillage et d'ouverture, il n'est pas exercé de forces de retenue ou de rappel supplémentaires.

13. Procédé selon la revendication 12, **caractérisé en ce que** le mouvement de rotation de l'arbre de sortie (15) est interrompu à l'aide de butées d'extrémité (40, 41) sur l'engrenage hélicoïdal (16), le dispositif de commande (17) bloque l'arrêt de l'arbre de sortie (15) et, par suite, du moyen de commande (14) et, au bout d'un temps de commande prédéterminé, l'acheminement d'énergie au moyen de commande (14) est interrompu.

14. Procédé selon la revendication 12 ou 13, **caractérisé en ce que** le dispositif de commande (17) est activé par des signaux d'informations qui sont transférés directement au dispositif de commande (17) de la serrure à barillet (1) via des éléments de contact (28) ou via un système émetteur/récepteur sans contact d'un support d'informations mobile (2, 25).

15. Procédé selon l'une quelconque des revendications 12 à 14, **caractérisé en ce que** le moyen de commande (14) est alimenté en énergie de façon intermittente au cours de la période active.
